(19) **Europäisches Patentamt**

**European Patent Office**

**Office européen des brevets**

(11) Veröffentlichungsnummer: **0 324 048 B1**

(12) # EUROPÄISCHE PATENTSCHRIFT

(45) Veröffentlichungstag der Patentschrift: **13.05.92**

(21) Anmeldenummer: **88102974.8**

(22) Anmeldetag: **29.02.88**

(51) Int. Cl.⁵: **F16T 1/00**

(54) **Vorrichtung zum Ableiten von Kondensat und dgl. aus Drucksystemen.**

(30) Priorität: **14.01.88 DE 8800358 U**

(43) Veröffentlichungstag der Anmeldung:
**19.07.89 Patentblatt 89/29**

(45) Bekanntmachung des Hinweises auf die
Patenterteilung:
**13.05.92 Patentblatt 92/20**

(84) Benannte Vertragsstaaten:
**AT BE CH DE ES FR GB GR IT LI LU NL SE**

(56) Entgegenhaltungen:
**DE-A- 3 508 229**

**MECHANICAL WORLD, Band 133, Februar 1953, Seiten 62-64, Manchester, GB; A.S. WADSWORTH: "Automatic drainage of compressed air systems"**

(73) Patentinhaber: **VIA Gesellschaft für Verfahrenstechnik mbH**
**Heerdter Lohweg 63-71**
**W-4000 Düsseldorf 11(DE)**

(72) Erfinder: **Hoffmann, Werner**
**Bockmühlstrasse 33**
**W-4050 Mönchengladbach 3 (Odenkirchen)(DE)**
Erfinder: **Frischmann, Werner**
**Wilhelmshöhe 37 a**
**W-5810 Witten-Stockum(DE)**

(74) Vertreter: **Müller, Gerd et al**
**Patentanwälte HEMMERICH-MÜLLER-GROSSE-POLLMEIER-MEY-VALENTIN Hammerstrasse 2**
**W-5900 Siegen 1(DE)**

EP 0 324 048 B1

**Beschreibung**

Die Erfindung betrifft eine Vorrichtung zum Ableiten von Kondensat-/Ölemulsion und dgl. aus Drucksystemen, wie Druckluftsystemen, die einen Sammelraum für das Kondensat aufweist, der mit zumindest einem Füllstandmesser und einem von diesem automatisch gesteuerten Auslaßventil versehen ist.

Eine derartige Vorrichtung ist aus der DE-PS 31 49 830 bereits bekannt.

Der bekannte Kondensatableiter ermöglicht es bereits, in Drucksystemen sich sammelndes Kondensat (das eine Emulsion aus Öl und kondensierter Feuchtigkeit darstellt) unter Ausnutzung der Druckenergie, jedoch ohne unerwünschte Verluste des Druckmediums und ohne ständige Überwachung durch Personal vollautomatisch abfließen zu lassen, wobei dieser Stand der Technik bereits zur Erlangung eines möglichst störungsfreien Betriebes auf bewegliche Komponenten, insbesondere auf drehbar gelagerte Teile verzichtet, abgesehen von dem naturgemäß bewegliche Teile umfassenden Auslaßventil.

Die bekannte Vorrichtung hat aber noch Nachteile. Ein wesentlicher Nachteil ist darin zu sehen, daß die Zeit, die vom Zeitpunkt des Öffnens des Auslaßventils, gesteuert von dem Fühlstandsmesser, bis zum Entleeren des Sammelraums für das Kondensat vergeht, verhältnismäßig kurz ist, was es schwierig macht, das Auslaßventil so rechtzeitig wieder zu schließen, daß zwar im wesentlichen das gesamte Kondensat über das Auslaßventil abgegeben wird, aber möglichst noch kein Druckmedium, also z. B. Druckluft. Die Abgabe von Druckmedium kann, falls es sich um einen aggresiven Stoff handelt, umweltschädigend sein. Im Falle von Druckluft ist es störend, daß mit dem Austreten von Druckluft sehr starke Geräuschentwicklung verbunden ist.

Ein weiterer Nachteil der bekannen Einrichtung ist die komplizierte Form des Sammelraums, die es erforderlich macht, die Vorrichtung bspw. durch Druckguß herzustellen.

Ein weiterer Nachteil ist der, daß es schwierig ist, optisch die korrekte Funktion des bekannten Kondensatableiters zu überprüfen. Zur Überprüfung dienen daher komplizierte elektronische Vorrichtungen, die selbst wieder störanfällig sind.

Schließlich hat es beim Stand der Technik sich als nachteilig erwiesen, daß bei infolge von Entspannungsvorgängen eintretender Abkühlung der Anordnung außen auf der Anordnung sich Umgebungsfeuchtigkeit in Form von Wassertröpfchen niederschlägt, was unerwünscht sein kann.

Aufgabe der Erfindung ist es, die Vorrichtung der eingangs genannten Art dahingehend weiterzubilden, daß die Zeit, die das Kondensat zum Abfließen benötigt, durch Reibung und Wirbelbildung der Kondensatflüssigkeit verlängert wird und dadurch der Zeitpunkt leichter festgelegt werden kann, zu dem zwar das Kondensat weitgehend abgeflossen ist, aber noch kein Druckmedium ausgepreßt wird.

Desweiteren sollte die Vorrichtung derart ausgestaltet sein, daß bei Bedarf auch eine optische Überwachung der einwandfreien Funktion der Vorrichtung möglich ist.

Außerdem sollte die Vorrichtung einfacher als der Stand der Technik ausgebaut sein, insbesondere ohne Druckgußteile auskommen.

Gelöst wird diese Aufgabe durch die kennzeichnenden Merkmale des Hauptanspruchs, also dadurch, daß der Sammelraum von einem schraubenformig aufgewickelten Leitungsstück gebildet wird, dessen unteres Ende in eine Steigleitung mündet, und dessen oberes Ende mit der Steigleitung über eine Druckausgleichsleitung verbunden ist, und dadurch, daß der Füllstandsmesser von einem in der Steigleitung angeordneten Fühler gebildet wird, und daß das eine Ende der schraubenformig aufgewickelten Leitung mit dem Drucksystem und das andere Ende mit dem Auslaßventil verbunden ist. Die Druckausgleichsleitung ist gemäß einer Ausführungsform flexibel.

Wenn der Sammelraum von einem aufgewikkelten Leitungsstück gebildet wird, statt von einem kesselförmigen Behälter, wie beim Stand der Technik, ergibt sich für die Kondensatflüssigkeit während des Ausfließvorgangs ein längerer Weg und höhere Reibung, wodurch das Ausfließen einer bestimmten Flüssigkeitsmenge wesentlich mehr Zeit in Anspruch nimmt, als es beim Stand der Technik der Fall ist. Dies ist vorteilhaft, weil es dadurch wesentlich einfacher ist, das Auslaßventil zu einem Zeitpunkt wieder zu schließen, zu dem zwar im wesentlichen das gesamte Kondensat abgeflossen ist, aber noch kein Druckmedium ausgepreßt wurde. Dies hat den Vorteil, daß einerseits kein Druckmedium verloren geht bzw. an die Umwelt gelangt, andererseits der Geräuschpegel, der mit dem Austreten von Druckmedium jeweils verbunden wäre, erheblich niedriger gehalten werden kann.

Die Konstruktion ist auch wesentlich einfacher als beim Stand der Technik, da auf komplizierte Druckgußteile, wie sie der Stand der Technik notwendigerweise einsetzt, hier verzichtet werden kann.

Außerdem ermöglicht die neuartige Konstruktion Ausführungsformen, die weitere Vorteile bringen. So könnte gemäß einer Ausführungsform das eine Ende der Leitungsspirale mit dem ersten Anschluß eines Verteilerstücks verbunden sein, dessen zweiter Anschluß zum Auslaßventil führt und dessen dritter Anschluß mit der Steigleitung in Verbindung steht. Alternativ könnte das Verteilerstück ein Kreuzverteilerstück mit vier Anschlüssen sein und der sich dadurch ergebende vierte Anschluß

2

mit einem Blindstopfen versehen sein. Durch diese Maßnahmen wird ohne wesentliche Verkomplizierung der Gesamtanordnung eine außerordentliche Vielgestaltigkeit der Anwendungsmöglichkeiten erreicht.

In der DE-A-35 08 229 ist bereits eine Einrichtung zur Verminderung des Abblasdruckes von Kondensatableitern offenbart, bei der dem als Kondensatableitventil dienenden, automatisch gesteuerten Auslaßventil eine spiralförmig bzw. schraubenartig aufgewickelte Rohrleitung nachgeschaltet ist, die einen im wesentlichen gleichbleibenden inneren Querschnitt aufweist, welcher kleiner als der Querschnitt des Kondensatableitventils ausgeführt ist. Diese Rohrleitung hat dabei nicht nur eine gestreckte Länge, die einem Vielfachen ihres Querschnittsdurchmessers entspricht, sondern auch ihr Wickeldurchmesser ist noch um ein Vielfaches größer augeführt als ihr Querschnittsdurchmesser.

Sinn und Zweck dieser Vorrichtung ist es, den Austritt von Kondensat und nachfolgendem Druckgas soweit zu verstetigen, daß die Gefahr von Verstopfungserscheinungen vermieden wird, daß störende Geräuschentwicklung praktisch beseitigt ist, und daß keine ungewünschten Kondensatnebel mehr am Austritt des Kondensatableiterrohrs entstehen, sowie gegebenenfalls nachgeschaltete Wasser-Öl-Seperatoren auch ungestört arbeiten können.

Gemäß einer noch anderen Ausführungsform der Erfindung sind die schraubenförmige Leitungund die Steigleitung aus Rohrmaterial einstückig formt. Dies ergibt eine besonders billige Herstellungsart. Die Steigleitung kann außerhalb es von den Windungen gebildeten Zylinder verlaufen, vorzugsweise dann nahe der Zylinderwandungsfläche, um auf diese Weise möglichst wenig Raum zu beanspruchen.

Noch günstiger ist es, wenn die Steigleitung innerhalb des Zylinders verläuft, weil die Anordnung dadurch noch kompakter wird, Dabei ist es günstig, wenn die Steigleitung im wesentlichen vertikal und parallel zur Zylinderachse liegt.

Die Herstellung wird verbilligt, wenn das Rohrmaterial aus schlagfestem Kunststoff, wie Polystyrol besteht. Die Steigleitung kann zumindest im Bereich des Fühlers auch transparent sein, was die optische Überwachung der einwandfreien Funktion der Anordnung erleichtert. Von Vorteil ist, wenn der Fühler ein Wärmefühler ist, der von oben in die Steigleitung hineinragt. Ein Wärmefühler hat sich als besonders robust erwiesen, obwohl auch andere, ein elektrisches Signal liefernde Fühler eingesetzt werden können, bspw. Fühler, bei denen infolge Änderung seiner z. B. elektrischen Leitfähigkeit, Induktivität oder Kapazität ein elektrisches Strom- oder Spannungssignal erzeugt wird oder wobei das Signal in eine Änderung einer Wechselspannungsfrequenz besteht. Derartige Fühler sind an sich bekannt, siehe die DE-AS 12 52 430, DE-PS 449 533 und DE-PS 845 713.

Zur weiteren Geräuschdämmung während der Kondensatableitung wie auch zur Wärmeisolierung kann es günstig sein, die gesamte Anordnung in wärmeisolierndes Material, wie Schaumstoff, einzuhüllen. Feste Schaumstoffe, wie Styropor oder ähnliches, haben aber nicht nur wärmeisolierende und schalldämpfende Eigenschaften, sondern erhöhen auch die mechanische Stabilität der Gesamtanordnung.

Zur weiteren Verbilligung der Anordnung kann ggf. auch das Magnetventil hinsichtlich seines Ventilgehäuses, Ventilsitzes und Ventilkolbens aus Kunststoff gefertigt sein.

Die Druckausgleichsleitung ist vorzugsweise flexibel oder umfaßt ein flexibles Leitungsstück, das zudem zu einer Spiralwindung gebogen sein kann, weil zwischen den Anschlußstellen der Druckausgleichsleitung beim Betrieb Verschiebungen auftreten können, die bei starrer Druckausgleichsleitung diese mechanisch stark belasten und zu deren vorzeitigen Bruch führen können.

Da kein Druckbehälter mehr vorhanden ist, sondern nur noch eine Druckleitung, wird auch die Erfüllung von Anforderungen, die die sogenannte Druckbehälterverordnung in der Bundesrepublik Deutschland zum Inhalt hat, erleichtert. Infolge des höheren Strömungswiderstandes beim Ablassen des Kondensats wird auch die Stoß- und Druckbelastung des Magnetventils verringert, was nicht nur die längere Herausblaszeit und damit die genauere Steuerung ermöglicht, sondern auch zu einer längeren Lebensdauer des Magnetventils führt.

Die erfindungsgemäße Vorrichtung besitzt wesentlich weniger Gewicht als die Vorrichtung gemäß dem Stand der Technik. Der schwerste Teil ist das Magnetventil, so daß es meist günstig sein wird, dieses Magnetventil am unteren Ende der Leitung anzuordnen. Infolge des verhältnismäßig geringen Gewichtes der gesamten Vorrichtung kann meist auf zusätzliche Befestigungseinrichtungen verzichtet werden, was bedeutet, daß die Vorrichtung lediglich von dem Anschluß getragen wird, der das Kondensat aus dem Drucksystem abführen soll. Werden zusätzliche Befestigungen gewünscht, könnte beim Umschäumen der Anordnung ein zur Schraubenachse paralleler Kanal im Hartschaum vorgesehen werden, in den ein Kunststoffrohr einschiebbar ist, das an seinem einen unteren Ende einen die Anordnung tragenden Stützteller aufweist. Das obere Rohrende könnte eine Befestigungseinrichtung aufweisen, mit der Ableiter an geeigneter Stelle aufhängbar wäre.

Durch die automatische Steuerung, die pneumatisch erfolgen kann, aber hier vorzugsweise elektronisch erfolgt, läßt sich auch eine elektronische Auswerteinrichtung vorsehen, die die Häufigkeit der Ausblasvorgänge und sonstige statistische Daten erfassen könnte. Eine derartige elektronische Auswerteinrichtung wie auch andere, für die elektrische Steuerung vorgesehene Ausrüstungen könnten separat an anderer Stelle angeordnet werden.

Die Erfindung wird nachfolgend anhand von Ausführungsbeispielen näher erläutert, die in den Zeichnungen dargestellt sind. Es zeigen:

Figur 1     schematisch eine Vorrichtung zum Ableiten von Kondensat aus einem Kältetrockner;

Figur 2     eine ähnliche Anordnung zum Ableiten von Kondensat aus einem Speicherkessel;

Figur 3     eine ähnliche Anordnung zur Entwässerung an einem tiefen Punkt in einem Leitungsnetz;

Figur 4     in einer annähernd maßstäbliche Ansicht von oben auf eine Ausführungsform der erfindungsgemäßen Vorrichtung;

Figur 5     eine Seitenansicht der Ausführungsform gemäß Figur 4 in Richtung der Pfeile V-V der Figur 4; und

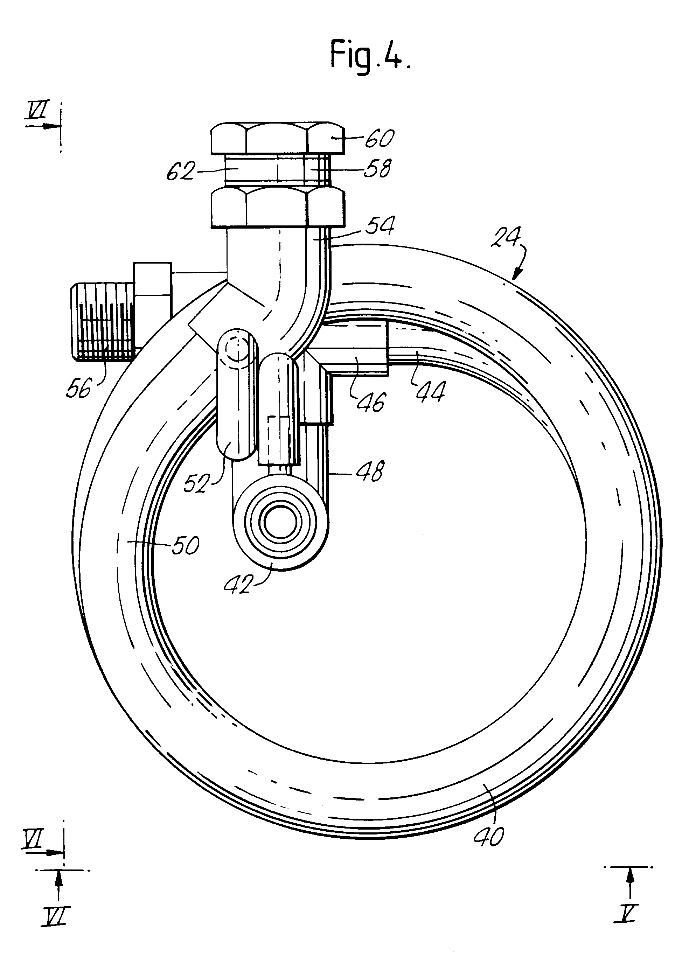

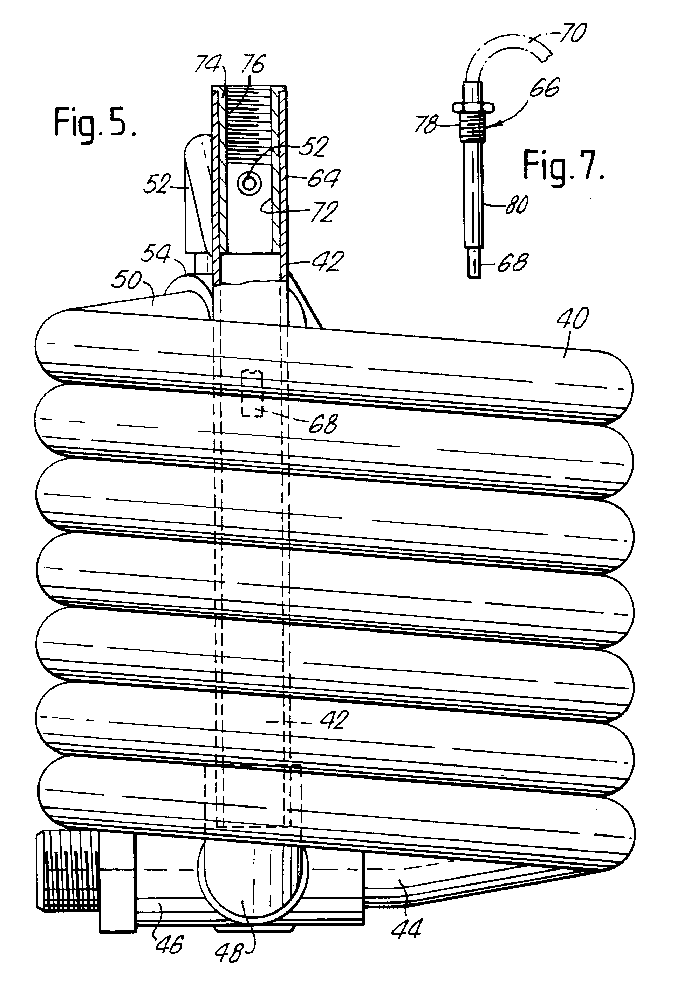

Figur 5     eine Seitenansicht in Richtung der Pfeile VI-VI der Figur 4.

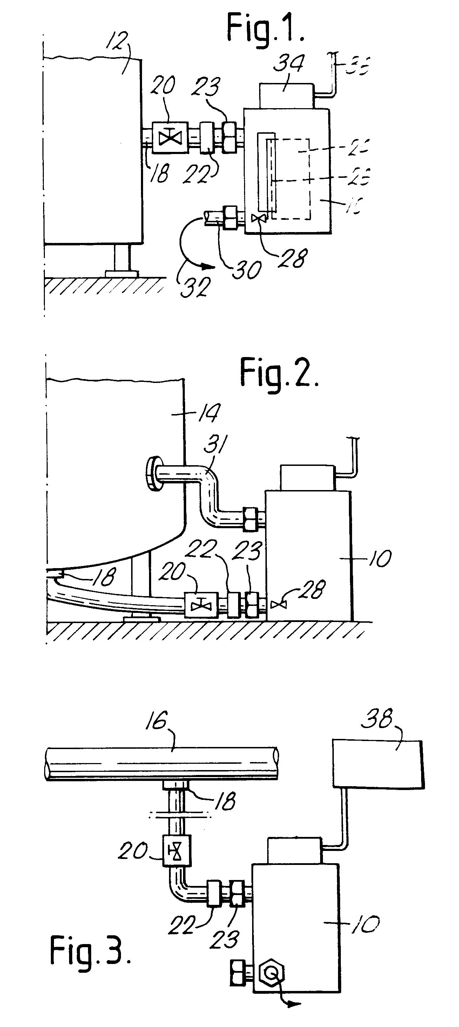

Figur 1 bis 3 zeigen in schematischen Darstellungen eine Vorrichtung 10 zum Ableiten von Kondensat oder dgl. aus einem Drucksystem, gemäß Figur 1 in Form eines Kältetrockners 12, gemäß Figur 2 in Form eines Speicherkessels 14 und gemäß Figur 3 in Form eines tiefen Punktes in einem Leitungsnetz 16. An diesen Stellen fällt Kondensat an, meist in der Form von Öl-/Wasseremulsion, die auch noch mit Schmutz versetzt sein kann. Diese Emulsion muß von Zeit zu Zeit entfernt werden. was vorzugweise entweder in periodischen Abständen erfolgt, oder, was günstiger ist, bei Erreichen einer bestimmten Kondensatmenge. Die Vorrichtung 10 ist an der entsprechenden Ableitungsstelle 18, an der meist noch ein Absperrventil 20 vorgesehen ist, über eine Anschlußmuffe oder -verschraubung 22, 23 angeschlossen. Die Ableitungsstelle liegt so, daß die Öl-/Wasseremulsion mit natürlichem Gefälle in die Vorrichtung zum Ableiten von Kondensat, in folgenden auch Kondensatableiter genannt, fließen kann.

Innerhalb des Kondensatableiters befindet sich ein Sammelraum 24, der mit einem Füllstandsmesser 26 versehen ist, in Figur 1 nur schematisch als Block dargestellt.

Wird eine bestimmte Kondensathöhe in dem Sammelraum 24 erreicht, gibt der Füllstandsmesser ein Steuersignal an ein Auslaßventil 28 ab, woraufhin dieses sich in Richtung auf eine Abflußleitung 30 öffnet und das Kondensat aufgrund der auf dem Spiegel der Kondensatflüssigkeit lastenden Druckkraft des Drucksystems durch das Ventil 28 und die Abflußleitung 30 aus dem Kondensatableiter 10 ausgepreßt wird, siehe Pfeil 32.

Bei der Einrichtung öffnet sich das Ventil 28 für einen bestimmten, ggf. auch einstellbaren Zeitraum von bspw. 1.....3 Sekunden, in welcher Zeit bei bestimmten Druckverhältnissen und bestimmter Viskosität des Kondensats eine ganz bestimmte Menge Kondensat ausgestoßen werden kann, wobei die Zeit so einstellbar ist, daß gerade knapp sowiel Kondensat ausgestoßen wird, wie sich bis zum Auslösen des Ventils in dem Kondensatableiter angesammelt hat.

Es können entsprechende elektronische Steuerungen zusätzlich vorgesehen sein, bspw. in Form eines Aufsatzes 34, der über ein Kabel 36 auch mit an anderem Ort angebrachten elektronischen Überwachungseinrichtungen verbunden sein kann, um so bspw. zentral die Funktion von zahlreichen Kondensatableitereinheiten zu überwachen und statistisch auswerten zu können.

Der Block 38 in Figur 3 zeigt eine derartige Anlage schematisch.

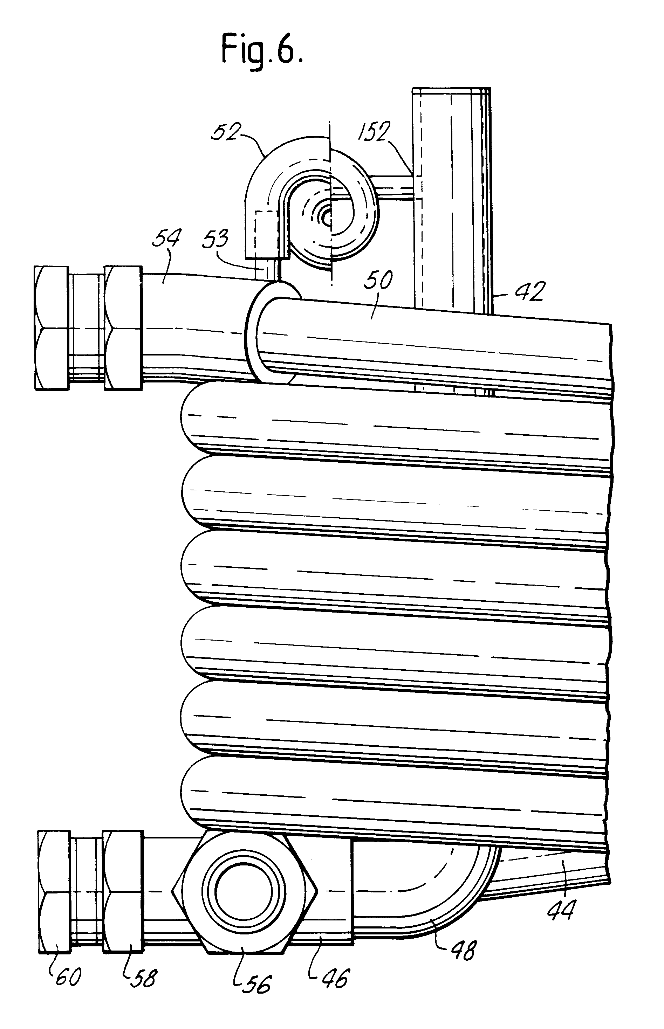

Es sei nun näher auf die Einzelheiten der erfindungsgemäßen Vorrichtung eingegangen, wobei in der Figur 4 eine Ansicht von oben auf einen Sammelraum 24 wiedergegeben ist, der die Form eines schraubenförmig aufgewickelten Leitungsstücks 40 hat. Das untere Ende dieses Leitungsstücks mündet - über ein Verzweigungsstück 46 und ein Winkelstück 48 - in eine Steigleitung 42, während das obere Ende 50 über eine Druckausgleichsleitung 52 mit dieser Steigleitung 42 in Druckverbindung steht. Es ist zweckmäßig, auch das obere Ende 50 in ein Winkelstück 54 übergehen zu lassen, das eine geeignete Verschraubungs- oder Anschlußmuffe tragen kann, bspw. wie sie in Figur 1 mit 23 bezeichnet wurde. Das Winkelstück 54 kann zweckmäßigerweise auch einen Ansatz 53 für die Druckausgleichsleitung 52, die aus flexiblem Rohrmaterial bestehen sollte, aufweisen, wie Figur 4 erkennen läßt. Auch die Steigleitung 42 weist einen Ansatz auf, auf den ein eine Spiralwindung bildendes Schlauchstück 52 aufgeschoben und in geeigneter Weise gegen Abrutschen gesichert ist. Statt dem Schlauchstück 52 kann auch ein entsprechendes Rohrstück direkt in passenden Bohrungen in der Wand von Steigleitung 42 bzw. Winkelstück 48 oder Leitungsstück 40 eingeschweißt oder eingeklebt sein, wie in Figur 6 bei 152 zu erkennen ist. Alle beschriebenen Teile können aus Metall bestehen, günstiger ist aber die Herstellung aus Kunststoff, bspw. aus transparentem Polyvenylchlorid (insbesondere gilt dies für das Steigrohr 42), oder auch aus "grauem" Polyamid, das eine etwas höhere Festigkeit als transparentes Polyvenylchlorid besitzt und besonders geeignet für das spiralförmig aufgewickelte Leistungsstück 40 ist. Die Winkelstücke 54 bzw. 46 können ebenfalls aus Kunststoff bestehen, wobei die Verbindung zwischen den einzelnen Teilen durch Verschweißen oder Verkleben erfolgen kann.

Vom unteren Verzweigungsstück 46 geht nicht nur das Winkelstück 48 für die Steigleitung 42 aus, sowie das untere Ende 44 der Leitung 40, sondern auch zwei weitere Anschlußstutzen 56 bzw. 58. Der Anschlußstutzen 58 ist bei der hier dargestellten Ausführungsform mit einem Blindstopfen 60 verschlossen, während an dem Anschluß 56 das Auslaßventil 28 (siehe Figur 1) angeschlossen werden kann, in den Figuren 4, 5 und 6 nicht dargestellt.

Alternativ kann das Auslaßventil auch an den Anschluß 58 angebracht werden, in welchem Falle der Anschluß 56 mit einem Blindverschluß abgeschlossen wäre, jedoch ist die dargestellte Ausführungsform besonders günstig, weil dann beim Ausblasen des Kondensat und mitgerissene Festteile im wesentlichen die gleiche Bewegungsrichtung aus dem Rohr 44 durch das Verzweigungsstück 46 in den Anschlußstutzen 56 beibehalten, so daß sich die Gefahr verringert, daß sich Festteile an Umlenkecken ablagern. Der angestrebte und die Ausblaszeit erhöhende Reibungswiderstand sollte nämlich möglichst durch glattwandige und keine scharfen Ecken aufweisende, wenn auch glattwandige und keine scharfen Ecken aufweisende, wenn auch langgestreckte Leistungsteile erreicht werden, während Verengungsstellen (z. B. Düsen) und scharfe Krümmungen zwar auch in die gleiche Richtung wirken, aber den Nachteil haben, daß sich hier schnell Ablagerungen und Verstopfungen bilden können.

Anschluß 56, Anschluß 58 oder Anschluß 62 sind von besonderem Vorteil bei solchen Anordnungen, wo der Ablauf des Kondensats sehr tief liegt, wie bspw. bei dem in Figur 2 dargestellten Druckbehälter 14. Für diesen Fall ist es auch besonders günstig, wenn das Verzweigungsstück 46 eine Vierfachverzweigung ist, weil dann, bei Anschluß des Stutzens 56 an die Ablaufleitung des Kessels 14, der Ausflußstutzen 56 in eine andere Richtung (parallel zur Kesselwand, nicht in Richtung auf die Kesselwand) weist, so daß der Kondensatableiter 10 sehr nahe an dem Kessen 14 aufgestellt werden kann. Es ist eine Druckausgleichsleitung 31, zum Kessel vorzusehen, die mit dem Anschluß 62 in Verbindung steht. Auch diese liegt dann parallel zur Kesselwand.

Um sicherzustellen, daß bei einer bestimmten Füllstandshöhe des als Sammelraum wirkenden Leitungsstücks 40 das Auslaßventil 28 für eine bestimmte Zeitdauer geöffnet wird, ist in das obere Ende 64 der Steigleitung 42 ein Sensor 66 einführbar, der in Figur 7 in einer Seitenansicht (bzgl. Figur 3, 4 und 5 mit nur halb so großem Maßstab) dargestellt ist. Sobald der Flüssigkeitsspiegel in den Windungen des Leitungsstücks 40 und damit auch in dem Steigrohr 42, das ja infolge der Druckausgleichsleitung 52 die gleiche Flüssigkeitshöhe besitzt, das untere Ende 68 des Sensors 66 berührt und umspült, gibt dieser Sensor ein Auslösesignal bspw. über ein Kabel 70 an eine entsprechende Steuerungseinrichtung ab, die wiederum daraufhin für eine vorbestimmte, einstellbare Zeitdauer das Auslaßventil 28 öffnet, so daß für diese vorbestimmte Zeitdauer die Kondensatflüssigkeit unter Wirkung des Betriebsdruckes des Druckluftsystems in das Auslaßventil 28 und die Abflußleitung 30 ausgeblasen wird, wobei die Einstellung dieser Öffnungszeit für das Ventil 28 so gewählt werden kann, daß sich das Ventil 28 wieder schließt, sobald etwa 90 % bis 95 % des Flüssigkeitsstranges innerhalb der Leitung 40 aus dem Ventil ausgetreten sind. Ein geringer Flüssigkeitsrest, der genau eingestellt werden kann, verhindert, daß Druckmedium ebenfalls austritt.

Ein als Druckausgleichsverbindung dienender Raum 72 wird gebildet durch einen Einsatz 74 vorzugsweise aus Kunststoff, der in das obere Ende 64 der Steigleitung 42 eingeschoben und verklebt ist und an seinem oberen Ende mit einem Innengewinde 76 versehen ist, während das untere Ende geringfügig aufgebohrt ist und dadurch einen Abstand zum Mantel 80 des mittleren Teils des Sensors 66 bildet, wenn dieser Sensor 66 seinem Einschraubgewinde 78 in den Einsatz 74 eingeschraubt wird. Das Gewinde 78 des Sensors 66 hat etwa die Länge des Innengewindes 76, und mittels entsprechender Dichtungseinrichtungen läßt sich der Sensor 66 somit druckdicht in die Steigleitung 42 einführen.

Aus Platzgründen ist das Steigrohr 42 im übrigen innerhalb des von den Windungen 40 gebildeten Zylinders angeordnet, wie die Figur 4 deutlich erkennen läßt, jedoch ist auch grundsätzlich denkbar, die Steigleitung 42 außerhalb dieses von den Windungen 40 gebildeten Zylinders anzuordnen, naturgemäß aus Platzgründen dann möglichst nahe an diesen Windungen. Da die Steigleitung 42 bei der dargestellten Ausführungsform mit der schraubenförmig aufgewickelten Leitung 40 nicht einstückig ist, sondern über entsprechende Verbindungsstücke 44, 46, 54, 52 in Verbindung steht, ist es ohne Probleme möglich, diese beiden Leitungen aus unterschiedlichem Material zu fertigen, bspw. die schraubenförmig aufgewickelte Leitung aus besonders widerstandsfähigem grauen Polystyrol und die Steigleitung, die weniger stark beansprucht wird, da dort keine so hohen Strömungsgeschwindigkeiten erreicht werden, aus durchsichtigem Polystyrol. Dadurch wird es möglich, rein optisch die Funktion des Kondensatabschneiders zu überprüfen, bspw., ob der Sensor 66 in korrekter Weise ein Auslösesignal gerade dann abgibt, wenn seine Spitze 78 vom Flüssigkeitsspiegel berührt wird, und ob die gewünschte Restmenge an Kondensat noch in der Leitung 40 bzw. der Steigleitung 42 nach erneutem Schließen des Ventils verbleibt.

Sollte sich mit der Zeit Schmutz an den Innenwänden der Steigleitung 42 absetzen, könnte bei Herausschrauben des Sensors 66 mit einem Reinigungsgerät eine Säuberung vorgenommen werden.

Bei vielen Anwendungsfällen kann allerdings auf eine derartige Überwachung verzichtet werden. Wenn zudem eine besonders weitgehende Geräuschdämmung erwünscht ist, kann die in Figur 5 gezeigte Anordnung mit einem Kunststoffschaum umgeschäumt werden, was zum einen der gesamten Anordnung eine große innere Stabilität gibt, zum anderen eine Geräuschdämmung bewirkt, und schließlich auch eine Wärmedämmung ermöglicht, so daß nicht etwa sich an den Außenflächen der Leitung 40 Umgebungsfeuchtigkeit niederschlägt, falls sich durch Entspannungsvorgänge oder druckkaltes, von Kältetrocknern kommendes Kondensat diese Windungen sich stark abkühlen sollten.

Der Sensor 66 arbeitet vorzugsweise als thermischer Sensor, wobei er bspw. an seinem unteren Ende eine Fühler besitzt, der durch eine Heizspirale auf bspw. 80° C aufgeheizt wird. Wenn nun durch ein Eintauchen der Spitze 68 in Kondensatflüssigkeit innerhalb einer Zeitdauer von z. B. 100 oder 120 ms eine Temperaturänderung von 1° C (überschreitend oder unterschreitend) auftritt, wird elektronisch ein Signal ausgelöst, das einer Auswerterelektronik zuführbar wäre, die wiederum einerseits das Ventil 28 öffnet, andererseits einen einstellbaren Zeitgeber auslöst, der nach der eingestellten Zeit von bspw. 1 Sekunde ein weiteres Signal abgibt, das das Ventil 28 wieder schließt. Gleichzeitig könnten die Signale auch für andere Zwecke ausgewertet werden. Bspw. könnte ein Warnsignal abgegeben werden, wenn aus irgendwelchen Gründen das Abblasventil 28 offen bleibt, oder der Sensor 68 weiterhin in Flüssigkeit taucht oder Störungen in der Elektronik selbst feststellbar sind. Anstelle eines Sensors, der, wie hier geschildert, als thermischer Differenzschalter in beide Temperaturvorrichtungen arbeitet, könnten auch optische Meßeinrichtungen vorgesehen werden, oder auch kapazitive Einrichtungen, oder sogar Ultraschallmeßeinrichtunge, wenn auch sich die thermische Anordnung als besonders robust und für die hier anfallenden, Öle und Verschmutzungen enthaltenden Kondensate als besonders geeignet erwiesen hat.

**Patentansprüche**

1. Vorrichtung (10) zum Ableiten von Kondensat oder dgl. aus Drucksystemen, wie Druckluftsysteme, die einen Sammelraum (24) für das Kondensat aufweist, der mit zumindest einem Füllstandsmesser (26) und einem von diesem automatisch gesteuerten Auslaßventil (28) als Kondensatableitventil versehen ist, **dadurch gekennzeichnet,** daß der Sammelraum von einem schraubenförmig aufgewickelten Leitungsstück (40) gebildet wird, und das untere Ende (44) des Leitungsstücks (40) in eine Steigleitung (42) mündet, und dessen oberes Ende (50) mit der Steigleitung (42) über eine Druckausgleichsleitung (52) verbunden ist, daß der Füllstandsmesser (26) von einem in der Steigleitung (42) angeordneten Fühler (66) gebildet wird, und daß das eine Ende der schraubenförmig aufgewickelten Leitung mit dem Drucksystem und das andere Ende mit dem Auslaßventil (28) verbunden ist.

2. Vorrichtung nach Anspruch 1, **dadurch gekennzeichnet,** daß das eine Ende der schraubenförmig aufgewickelten Leitung (40) mit dem ersten Anschluß eines Verteilerstücks (46) verbunden ist, dessen zweiter Anschluß zum Auslaßventil (28) führt und dessen dritter Anschluß mit der Steigleitung (42) in Verbindung steht.

3. Vorrichtung nach Anspruch 2, **dadurch gekennzeichnet,** daß das Verteilerstück (48) ein Kreuzverteilerstück mit vier Anschlüssen ist, und daß der vierte Anschluß mit einem Blindstopfen (60) versehen ist.

4. Vorrichtung nach einem der Ansprüche 1 bis 3, **dadurch gekennzeichnet,** daß das schraubenförmig aufgewickelte Leitungsstück (40) und die Steigleitung (42) aus Rohrmaterial einstückig geformt sind.

5. Vorrichtung nach Anspruch 4, **dadurch gekennzeichnet,** daß die Steigleitung außerhalb des von den Windungen des schraubenförmig aufgewickelten Leitungsstücks (40) gebildeten Zylinders verläuft, vorzugsweise nahe der Zylinderwandfläche.

6. Vorrichtung nach Anspruch 4, **dadurch gekennzeichnet,** daß die Steigleitung (42) innerhalb des von den Windungen des schraubenförmig aufgewickelten Leitungsstücks (40) gebildeten Zylinders verläuft.

**7.** Vorrichtung nach Anspruch 6,
**dadurch gekennzeichnet,**
daß die Steigleitung (42) im wesentlichen vertikal und parallel zur Zylinderachse angeordnet ist.

**8.** Vorrichtung nach einem der Ansprüche 1 bis 7,
**dadurch gekennzeichnet,**
daß das Rohrmaterial aus Metall oder aus schlagfestem Kunststoff, wie Polyvenylchlorid (PVC) besteht.

**9.** Vorrichtung nach einem der Ansprüche 1 bis 8,
**dadurch gekennzeichnet,**
daß die Steigleitung (42) zumindest im Bereich des Fühlers transparent ist.

**10.** Vorrichtung nach Anspruch 9,
**dadurch gekennzeichnet,**
daß der Fühler (66) ein Wärmefühler ist, der von oben in die Steigleitung (42) hineinragt.

**11.** Vorrichtung nach einem der Ansprüche 1 bis 10,
**dadurch gekennzeichnet,**
daß die Anordnung in wärmeisolierendes Material, wie Hartschaum, eingehüllt ist.

**12.** Vorrichtung nach einem der Ansprüche 1 bis 11,
**dadurch gekennzeichnet,**
daß die Druckausgleichsleitung (52) flexibel ist.

**13.** Vorrichtung nach Anspruch 12,
**dadurch gekennzeichnet,**
daß die Druckausgleichsleitung (52) ein flexibles Schlauchstück umfaßt, daß auf starre Anschlußstützen, die an Steigleitung (42) bzw. Leitungsstück (40) angebracht sind, aufgeschoben ist.

**14.** Vorrichtung nach Anspruch 12 oder 13,
**dadurch gekennzeichnet,**
daß das flexible Schlauchstück eine Spirale mit einer Windung bildet, und in jeweils einem passenden Durchbruch in der Wand von Steigleitung (42) bzw. Leitungsstück (40) eingeschweißt oder eingeklebt ist.

**15.** Vorrichtung nach einem der Ansprüche 1 bis 14,
**dadurch gekennzeichnet,**
daß alle Teile - ausgenommen das Auslaßventil - aus PVC (Polyvenylchlorid) gefertigt sind.

**16.** Vorrichtung nach den Ansprüche 11 bis 15,
**dadurch gekennzeichnet,**
daß das wärmeisolierende Material einen Block bildet und auch einen Befestigungskörper für die Vorrichtung umschließt.

**17.** Vorrichtung nach Anspruch 16,
**dadurch gekennzeichnet,**
daß der Befestigungskörper ein durch eine parallel zur Schraubenachse verlaufende Bohrung im Block aus wärmeisolierenden Material gestecktes Rohr ist, das an einem (unteren) Ende einen als Auslagefläche für den Block dienenden Teller und an seinem anderen (oberen) Ende ein Befestigungsmittel wie Schraubgewinde aufweist.

**Claims**

**1.** A device (10) for draining condensate or the like from pressure systems such as compressed air systems, which exhibits for the condensate a collecting chamber (24) which is provided with at least one level-meter (26) and an outlet valve (28) controlled automatically from the latter as a condensate drain valve,
**characterized in that**
the collecting chamber is formed of a piece of piping (40) wound into a spiral and the bottom end (44) of the piece of piping (40) opens into a riser (42) and its top end (50) is connected to the riser (42) via a pressure-balance pipe (52), that the level-meter (26) is formed by a sensor (66) arranged in the riser (42), and that the one end of the pipe wound into a spiral is connected to the pressure system and the other end is connected to the outlet valve (28).

**2.** A device as in Claim 1,
**characterized in that**
the one end of the pipe (40) wound into a spiral is connected to the first connector of a distributor-piece (46), of which the second connector leads to the outlet valve (28) and the third connector is connected to the riser (42).

**3.** A device as in Claim 2,
**characterized in that**
the distributor-piece (48) is a crosspiece distributor with four connectors, and that the fourth connector is provided with a blind plug (60).

**4.** A device as in one of the Claims 1 to 3,
**characterized in that**
the piece of pipe (40) wound into a spiral and the riser (42) are shaped in one piece from raw material.

5. A device as in Claim 4,
**characterized in that**
the riser runs outside the cylinder formed by the turns of the piece of pipe (40) wound into a spiral, preferably close to the face of the cylinder wall.

6. A device as in Claim 4,
**characterized in that**
the riser (42) runs inside the cylinder formed by the turns of the piece of pipe (40) wound into a spiral.

7. A device as in Claim 6.
**characterized in that**
the riser (42) is arranged essentially vertical and parallel with the axis of the cylinder.

8. A device as in one of the Claims 1 to 7,
**characterized in that**
the raw material consists of metal or an impact-resistant plastics such as polyvinylchloride (PVC).

9. A device as in one of the Claims 1 to 8,
**characterized in that**
the riser (42) at least in the region of the sensor is transparent.

10. A device as in Claim 9,
**characterized in that**
the sensor (66) is a heat-detector which projects from above into the riser (42).

11. A device as in one of the Claims 1 to 10,
**characterized in that**
the arrangement is clad in heat-insulating material such as rigid expanded plastics.

12. A device as in one of the Claims 1 to 11,
**characterized in that**
the pressure-balance pipe (52) is flexible.

13. A device as in Claim 12,
**characterized in that**
the pressure-balance pipe (52) comprises a piece of flexible hose which is pushed onto rigid pipestubs which are fitted to the riser (42) and the piece of pipe (40) respectively.

14. A device as in Claim 12 or 13,
**characterized in that**
the piece of flexible hose forms a spiral of one turn and is welded or glued in each case into a suitable opening in the wall of the riser (42) and of the piece of pipe (40).

15. A device as in one of the Claims 1 to 14,
**characterized in that**
all of the parts - except the outlet valve - are manufacture from PVC (polyvinylchloride).

16. A device as in Claims 11 to 15,
**characterized in that**
the heat-insulating material forms a block and also encloses a fixing-body for the device.

17. A device as in Claim 16,
**characterized in that**
the fixing-body is a tube which is pushed through a hole drilled in the block of heat-insulating material to run in parallel with the axis of the spiral, and exhibits at one (the bottom) end a plate serving as a bearing area for the block and at the other (top) end of it a means of fastening such as a screw thread.

**Revendications**

1. Dispositif (10) pour l'évacuation de condensat ou analogue d'installations sous pression, comme des installations d'air comprimé, qui comporte une chambre de collecte (24) du condensat qui est équipée d'au moins un dispositif de mesure du niveau de remplissage (26) et d'une vanne d'évacuation (28) servant de vanne d'évacuation de condensat automatiquement commandée par ledit dispositif de mesure,
caractérisé en ce que la chambre de collecte est formée par un tronçon de conduit (40) enroulé de façon hélicoïdale et en ce que l'extrémité inférieure (44) du tronçon de conduit (40) débouche dans un conduit ascendant (42) et l'extrémité supérieure (50) du tronçon de conduit (40) est reliée au conduit ascendant (42) par l'intermédiaire d'un conduit d'équilibrage de pression (52), en ce que le dispositif de mesure du niveau de remplissage (26) est constitué par une sonde (66), agencée dans le conduit ascendant (42) et en ce que l'une des extrémités du tronçon de conduit enroulé hélicoïdalement est reliée à l'installation sous pression tandisque l'autre extrémitée est reliée à la vanne d'évacuation (28).

2. Dispositif selon la revendication 1
caractérisé en ce que l'une des extrémités du tronçon de conduit enroulé hélicoïdalement (40) est reliée au premier raccord d'une pièce d'embranchement (46) dont le deuxième raccord mène à la vanne d'évacuation (28) et dont le troisième raccord est relié au conduit ascendant (42).

3. Dispositif selon la revendication 2, caractérisé en ce que la pièce d'embranchement (48) est une pièce en croix à quatre raccords et en ce que le quatrième raccord est muni d'un bouchon d'obturation (60).

4. Dispositif selon l'une des revendications 1 à 3, caractérisé en ce que le tronçon de conduit hélicoïdal (40) ainsi que le conduit ascendant (42) sont formés d'un seul tuyau.

5. Dispositif selon la revendication 4, caractérisé en ce que le conduit ascendant s'étend à l'extérieur du cylindre formé par les spires du tronçon de conduit hélicoïdal (40), de préférence à proximité de la paroi cylindrique.

6. Dispositif selon la revendication 4, caractérise en ce que le conduit ascendant (42) s'étend à l'intérieur du cylindre formé par les spires du tronçon de conduit hélicoïdal (40).

7. Dispositif selon la revendication 6, caractérisé en ce que le conduit ascendant (42) est agencé essentiellement axialement et parallèlement à l'axe du cylindre.

8. Dispositf selon l'une des revendications 1 à 7, caractérisé en ce que le matériau tubulaire est métallique ou en matière plastique résiliente, comme le chlorure de polyvinyle (PVC)

9. Dispositif selon l'une des revendications 1 à 8, caractérisé en ce que le conduit ascendant (42) est transparent au moins dans la zone de la sonde.

10. Dispositif selon la revendication 9, caractérisé en ce que la sonde (66) est une sonde thermique qui pénètre par le haut dans le conduit ascendant (42).

11. Dispositif selon l'une des revendications 1 à 10, caractérisé en ce que l'agencement est enveloppé d'une matière thermoisolante, comme de la mousse rigide.

12. Dispositif selon l'une des revendications 1 à 11, caractérisé en ce que le conduit d'équilibrage de pression (52) est flexible.

13. Dispositif selon la revendication 12, caractérisé en ce que le conduit d'équilibrage de pression (52) comporte un tuyau flexible qui est appliqué sur des tubulures de raccordement rigides solidaires du conduit ascendant (42) ou du tronçon de conduit (40).

14. Dispositif selon la revendication 12 ou 13, caractérisé en ce que le tuyau forme une spirale à une spire et est soudé ou collé chaque fois dans un perçage adéquat pratiqué dans la paroi du conduit ascendant (42) ou du tronçon de conduit (40).

15. Dispositif selon l'une des revendications 1 à 14, caractérisé en ce que toutes les pièces, excepté la vanne d'évacuation, sont en PVC ( chlorure de polyvinyle ).

16. Dispositif selon les revendications 11 à 15, caractérisé en ce que le matériau thermoisolant constitue un bloc et enveloppe également un élément de fixation du dispositif.

17. Dispositif selon la revendication 16, caractérisé en ce que l'élément de fixation consiste en un tube qui traverse le matériau thermoisolant en bloc dans un perçage parallèle à l'axe de l'hélice et qui comporte, à une extrémité (inférieure), une assiette servant de surface d'appui du bloc et, à son autre extrémité (supérieure), un moyen de fixation tel qu'un filet de vis.

# Fig.1.

# Fig.2.

# Fig.3.

# Fig.4.

Fig.5.

Fig.7.

# Fig.6.